# EUROPÄISCHE PATENTSCHRIFT

(11) **EP 0 959 086 B1**
(45) Veröffentlichungstag und Bekanntmachung des Hinweises auf die Patenterteilung: **27.08.2003**
(21) Anmeldenummer: 99109122.4
(22) Anmeldetag: 08.05.1999
(51) Int. Cl.: C08G 18/32, C08G 18/38, C09D 175/02, C09D 5/08

(54) **2K-PUR-Korrosionsschutz-Decklack**
Two components PUR anticorrosion topcoat
Couche de finition anticorrosion à base de PUR à deux composants

(30) Priorität: 22.05.1998 DE 19822842
(43) Veröffentlichungstag der Anmeldung: 24.11.1999
(73) Patentinhaber: Bayer Aktiengesellschaft, 51368 Leverkusen (DE)
(72) Erfinder: Kurek, Gerald Dr., 51373 Leverkusen (DE); Schwindt, Jürgen Dr., 51373 Leverkusen (DE); Jahn, Peter, 51467 Bergisch Gladbach (DE)

(56) Entgegenhaltungen:
- US-A- 3 893 967
- US-A- 5 391 686
- US-A- 5 516 873
- US-A- 5 591 807
- US-A- 5 661 216

## Beschreibung

Die Erfindung betrifft eine spezielle Abmischung mit hohem Festkörpergehalt aus bestimmten Polyasparaginsäureestern, Polyaldiminen, Polyisocyanaten und speziellen Additiven sowie deren Verwendung als Korrosionsschutzdecklack.

Die jährlich durch Korrosion bedingten Schäden werden weltweit auf mehr als 100 Milliarden DM geschätzt, so daß der Entwicklung immer besserer Korrosionsschutzlacke nach wie vor eine große Bedeutung zukommt. Bei der Planung dieser Entwicklungsarbeiten müssen - wie in fast allen Bereichen der Lacktechnologie - immer schärfere Gesetzesvorlagen berücksichtigt werden, die eine deutliche Reduzierung des Lösemittelanteils im Lack vorschreiben. So fordern z.B. die US-Behörden bei Korrosionsschutzdecklacken einen VOC-Gehalt von max. 340 g/l. Das TL-Blatt 95 der Deutschen Bahn schreibt für lösemittelarme 2K-Deckbeschichtungsmittel einen Mindestfestkörpergehalt von 65 Vol.-% vor. Bei Einhaltung dieser Vorgaben und Verwendung der Kombination von hydroxyfunktionellen Polyacrylatharzen mit Polyisocyanaten als 2K-PUR-System sind Schichtdicken von max. 50 µm möglich. Die Auftragung dickerer Schichten ist hier mit mangelndem Standvermögen verbunden.

Es besteht nun Bedarf an 2K-PUR-Decklacken, die zum einen einen Festkörpergehalt von mindestens 80 Vol.-% aufweisen und somit die Erzeugung von bislang nicht ohne Blasenbildung möglichen Schichtdicken von bis zu 180 µm ermöglichen, deren Viskosität aber gleichzeitig in ausreichend niedrigen Bereichen liegt, so daß es bei der Wahl der Applikationsart keine wesentlichen Einschränkungen gibt. Darüber hinaus sollte eine ausreichend lange Topfzeit bei gleichzeitig kurzer Trocknungszeit erzielt werden, um den Zustand des optimalen Oberflächenschutzes möglichst schnell zu erreichen.

Diese Aufgabe läßt sich prinzipiell durch den Einsatz von 2K-PUR-High Solid-Systemen, die als Reaktivkomponenten Polyisocyanate und gewisse aminofunktionelle Reaktivverdünner enthalten, lösen. Bei diesen aminofunktionellen Reaktivverdünnern handelt es sich um Polyasparaginsäureester, Polyketimine und Polyaldimine, wie sie z.B in der EP-A 0 689 881 beschrieben sind. Die für Aminogruppen ansonsten sehr große Reaktivität gegenüber Isocyanaten wird bei den Polyasparaginsäureestern durch sterische und elektronische Effekte verringert ("gebremste Amine"), während bei den Polyketiminen und -aldiminen die primären Aminogruppen durch Reaktion mit Aldehyden oder Ketonen zu Iminogruppen blockiert sind und erst durch Hydrolyse oder Wärmeeinwirkung (Umlagerungsreaktionen) wieder ihre Reaktivität zurückerlangen. Die Härtung dieser Polyamine mit Polyisocyanaten liefert Überzüge mit sehr guten mechanischen Eigenschaften.

Abmischungen aus Polyisocyanaten, Polyasparaginsäureestern und Polyaldiminen bzw. Polyketiminen sowie ihre Verwendung als Bindemittelbestandteil in 2K-PUR-High Solid-Lacken sind bekannt. Die EP-A 0 531 249 z.B. beschreibt die Verwendung eines Bindemittelgemisches aus Polyisocyanaten, Polyaldiminen bzw. -ketiminen und Polyasparaginsäureestern ausschließlich unter Mitverwendung von hydroxyfunktionellen Verbindungen als Bestandteil von Autoreparaturlacken. In der EP-A 0 699 696 wird eine Abmischung aus Polyisocyanaten, Polyasparaginsäureestern, Polyaldiminen zusammen mit sogenannten Asparaginsäureesteraldiminen der Formel (I) 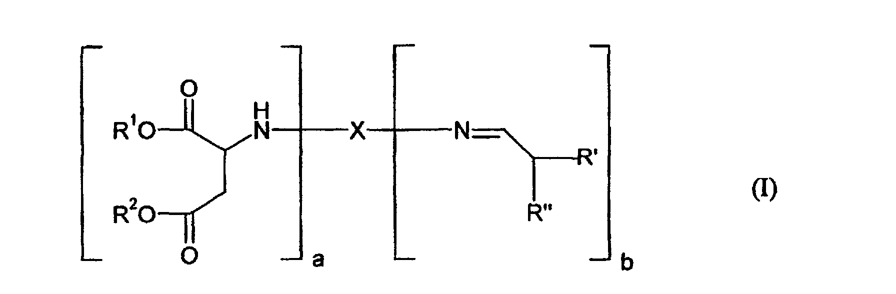 erwähnt, wobei
- X: ein Alkylenrest ist und
- a und b: ganze Zahlen zwischen 1 und 5 sind und die Summe aus a und b eine ganze Zahl zwischen 2 und 6 ist.

Als Vorteil dieser Abmischung wird eine bessere Verträglichkeit zwischen der Polyisocyanat- und der Aldiminkomponente genannt.

Die alleinige Abmischung von Polyisocyanaten mit Polyketiminen bzw. -aldiminen und Polyasparaginsäureestern - gegebenenfalls zusammen mit den in der Lacktechnologie bekannten Hilfsstoffen und Additiven - wird dagegen nur in der EP-A 0 689 881 beschrieben. Mit Hilfe dieser Bindemittelkombination lassen sich Lacke mit einem Festkörpergehalt bis zu 95 Gew.-% erzielen. Solche festkörperreichen Lacksysteme sind nicht nur ökologisch von großem Interesse, sondern auf Grund des geringeren Anteils an Lösemittel auch wirtschaftlich von Bedeutung. Es zeigt sich jedoch, daß daraus hergestellte Überzüge den speziellen Anforderungen eines Korrosionsschutz-Decklackes bezüglich ausreichender Schichtdicke und Rißfreiheit nicht mehr genügen. Gerade bei der Applikation von Schichtdicken von über 80 µm sind bereits "Nasenbildung" infolge mangelnden Standvermögens und ab 120 µm Blasenbildung im Film zu beobachten.

Jetzt konnte überraschend gefunden werden, daß sich auf Basis der Bindemittelkombination Polyisocyanat/Polyasparaginsäureester/Polyketimin bzw. -aldimin unter Mitverwendung einer speziellen Additivkombination aus Bis(2-phenoxyethyl)formal und Rizinusöl ein Überzugsmittel herstellen läßt, das den Anforderungen eines Ultra High Solid-Korrosionsschutz-Decklackes gerecht wird:
(i) hoher Festkörpergehalt (> 90 Gew.-%), (ii) Formulierung mit hohem Standvermögen möglich (keine Nasenbildung an senkrechten Flächen), (iii) keine Blasenbildung beim Trocknen des Filmes, (iv) ausreichende Topfzeiten, (v) Trocknungszeiten von unter 8 Stunden, (vi) vielfältige Applikationsmöglichkeiten, (vii) Schichtdicken bis zu 180 um möglich, (viii) sehr gute Haftung, (ix) keine Rißbildung im Film bei Erwärmung und (x) Witterungsbeständigkeit der Überzüge.

Gegenstand der Erfindung ist ein Überzugsmittel, das zu
A) 25 - 50 Gew.-% aus einer Polyisocyanatkomponente, zu
B) 5- 20 % aus einem oder mehreren Polyaminen der Formel (II) 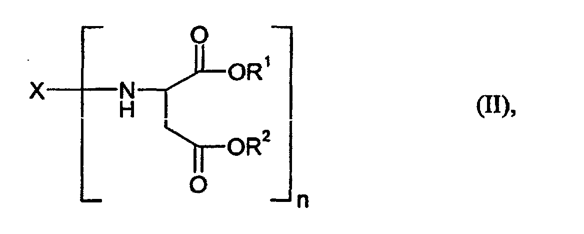 wobei ,
   - X: für einen n-wertigen, gegenüber Isocyanatgruppen inerten Rest steht, wie er durch Entfernung der primären Aminogruppen aus einem organischen Polyamin des Molekulargewichtsbereiches Mn 88 bis 400 mit n primären (cyclo)aliphatisch gebundenen Aminogruppen erhalten wird,
   - R¹ und R²: für gleiche oder verschiedene organische Reste mit 1 bis 18 C-Atomen stehen und
   - n: für eine ganze Zahl von mindestens 2 steht, zu
C) 10 - 30 Gew.-% aus einer oder mehreren Verbindungen des Molekulargewichtsbereiches Mn 112 bis 600 der allgemeinen Formel (III) 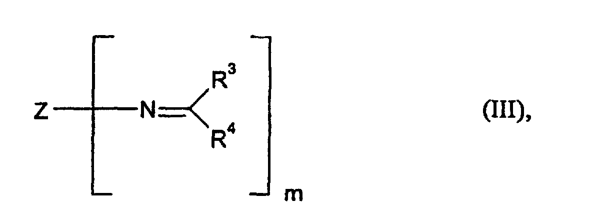 wobei
   - R³ und R⁴: für gleiche oder verschiedene Reste und für Wasserstoff oder organische Reste mit 1 - 18 C-Atomen stehen und
   - Z: für einen m-wertigen, gegenüber Isocyanatgruppen inerten Rest steht, wie er durch Entfernung der primären Aminogruppen aus einem organischen Polyamin des Molekulargewichtsbereiches Mn 88 bis 400 mit m primären (cyclo)aliphatisch gebundenen Aminogruppen erhalten wird, und
   - m: für eine ganze Zahl ≥ 2 steht, zu
D) 0,1 - 5,0 Gew.-% aus Acetalen der allgemeinen Formel (IV) 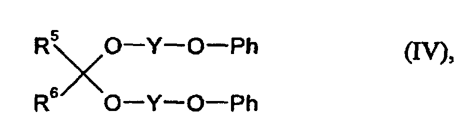 wobei
   - R⁵ und R⁶: für gleiche oder verschiedene Reste und für Wasserstoff oder organische Reste mit 1 - 18 C-Atomen stehen,
   - Y: für einen zweiwertigen organischen Rest mit 1 - 8 C-Atomen steht und
   - Ph: für einen gegebenenfalls kernsubstituierten Phenylrest steht, zu
E) 0,1 -5,0 Gew.-% aus Rizinusöl, zu
F) 0,1 - 10,0 Gew.-% aus einem oder mehreren in der Lacktechnologie üblichen Lösemittel, zu
G) 15 - 35 Gew.-% aus einem oder mehreren, aus der Lack- und Korrosionsschutz-Technologie bekannten Pigmenten sowie zu
H) 0 - 10 Gew.-% aus einem oder mehreren weiteren, aus der Lack- und Korrosionsschutz-Technologie bekannten Additiven besteht,
mit der Maßgabe, daß die Summe der prozentualen Gewichtsanteile der Komponenten A bis H 100 % ergibt.

Gegenstand der Erfindung ist ebenfalls die Verwendung dieses Überzugsmittels als Korrosionsschutzdecklack.

Für das erfindungsgemäße Überzugsmittel kommen als Polyisocyanatkomponente A insbesondere die an sich bekannten Lackpolyisocyanate mit (cyclo)aliphatisch gebundenen Isocyanatgruppen in Betracht. Es handelt sich hierbei insbesondere um Derivate von (cyclo)aliphatischen Diisocyanaten des Molekulargewichtsbereiches 168 bis 300 wie beispielsweise Hexamethylendiisocyanat, 2,2,4- und/oder 2,4,4-Trimethylhexamethylendiisocyanat, 2-Methyl-1,5-diisocyanatopentan, 1,4-Diisocyanatocyclohexan, 1-Isocyanato-3,3,5-trimethyl-5-isocyanatomethylcyclohexan (IPDI) und/oder von 1-Isocyanato-1-methyl-3(4)-isocyanatomethylcyclohexan.

Bei den "Derivaten" dieser Ausgangsdiisocyanate handelt es sich um die an sich bekannten Biuretgruppen, Isocyanuratgruppen, Isocyanurat- und Uretdiongruppen, Isocyanurat- und Allophanatgruppen oder Urethangruppen aufweisenden Lackpolyisocyanate auf Basis dieser Diisocyanate. Auch die entsprechenden Derivate von aromatischen Diisocyanaten wie beispielsweise von 2,4- und oder 2,6-Diisocyanatotoluol sind im Prinzip geeignet. Bei den genannten Urethangruppen aufweisenden Derivaten, d.h. den Urethangruppen aufweisenden Polyisocyanaten handelt es sich insbesondere um solche auf Basis von niedermolekularen Polyhydroxylverbindungen des Molekulargewichtsbereiches 62 bis 299 wie beispielsweise Ethylenglykol, Propylenglykol und oder Trimethylpropan.

Bei den als Komponente A besonders bevorzugt geeigneten Lackpolyisocyanaten handelt es sich um Isocyanuratgruppen-haltige Derivate der genannten Art auf Basis von Hexamethylendiisocyanat mit einem NCO-Gehalt von 16 bis 24 Gew.-% und einer Viskosität bei 23°C von max. 5 000, vorzugsweise max. 3 000 und ganz besonders bevorzugt max. 1 500 mPas. Diese können gegebenenfalls Uretdion-, Biuret-, Allophanat-, Harnstoff- und/oder Polyurethangruppen enthalten. Selbstverständlich können auch Gemische von zwei oder mehreren Polyisocyanaten der genannten Art als Polyisocyanatkomponente A eingesetzt werden.

Bei der Komponente B handelt es sich um Verbindungen der allgemeinen Formel (II) 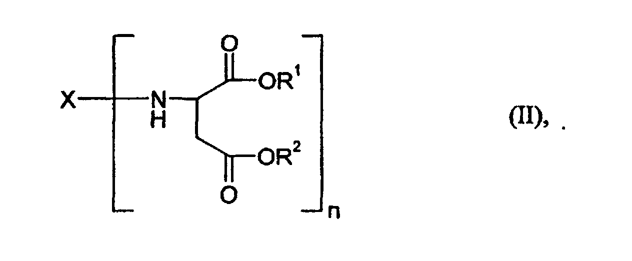 für welche X, R¹ und R² und n die bereits vorstehend genannte Bedeutung haben.

Bevorzugt werden solche Verbindungen der Formel (II) - nachstehend auch als Polyasparaginsäureester bezeichnet - verwendet, für welche n für 2 steht. Besonders bevorzugt sind jene, für welche X für einen zweiwertigen Kohlenwasserstoffrest mit 6 bis 30 C-Atomen steht, wie er z.B. durch Entfernung der Aminogruppen aus 1-Amino-3,3,5-trimethyl-5-aminomethylcyclohexan, 4,4'-Diaminodicyclohexylmethan, 3,3'-Dimethyl-4',4'-diaminodicyclohexylmethan, Hexahydro-2,4- und/oder 2,6-diaminotoluol, den isomeren C-Monomethyl-diaminodicyclohexylmethanen oder aus 3(4)-Aminomethyl-1-methylcyclohexylamin erhalten wird. Am meisten bevorzugt werden soche Verbindungen der allgemeinen Formel (II), für welche X für einen zweiwertigen Kohlenwasserstoff steht, wie er durch Entfernung der Aminogruppen aus 3,3'-Dimethyl-4,4'-diaminodicyclohexylmethan erhalten wird.

Zu den bevorzugten Ausgangskomponenten B gehören im übrigen solche der genannten Verbindungen der allgemeinen Formel (II), für welche R¹ und R² für eine Methyl-, Ethyl-, n-Butyl- oder 2-Ethylhexylgruppe, besonders bevorzugt jedoch für eine Ethylgruppe, stehen.

Die Herstellung der Ausgangsverbindungen B erfolgt in an sich bekannter Weise durch Umsetzung der entsprechenden primären Polyamine der Formel X―(―NH₂)ₙ mit Malein- oder Fumarsäureestern der allgemeinen Formel R¹OOC-CH=CH-COOR², wobei R¹, R², n und X die bereits vorstehend genannte Bedeutung haben.

Derartige Polyasparaginsäureester, ihre Herstellung sowie die zu ihrer Herstellung benötigten Polyamine und Malein- bzw. Fumarsäureester sind beispielsweise in der EP-A 0 689 881 und der EP-A 0 816 326 beschrieben.

Es können selbstverständlich auch Gemische von zwei oder mehreren Verbindungen der allgemeinen Formel (II) als Komponente B vorliegen.

Bei der Komponente C handelt es sich um die sogenannten Polyaldimine bzw. Polyketimine, wie sie beispielsweise (aber nicht ausschließlich) durch Reaktion von Carbonylverbindungen der allgemeinen Formel (V) 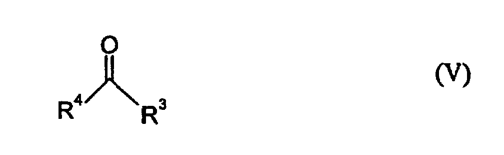 mit primären Aminogruppen enthaltenden Polyaminen unter Abspaltung von Wasser erhalten werden können, wobei R³ und R⁴ die bereits vorstehend genannte Bedeutung haben.

Zu den bevorzugten Polyaldiminen bzw. Polyketiminen gehören Verbindungen der allgemeinen Strukturformel (III) 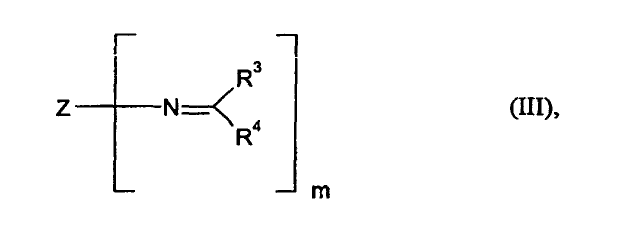 wobei
- R³ und R⁴: für gleiche oder verschiedene Reste stehen und für Wasserstoff oder organische Reste mit bis zu 18 Kohlenstoffatomen, insbesondere Alkylreste mit 1 bis 8 Kohlenstoffatomen stehen, wobei die Reste R³ und R⁴ auch zusammen mit dem Iminkohlenstoffatom einen 5- oder 6-gliedrigen cycloaliphatischen Ring bilden können mit der Maßgabe, daß die Reste R³ und R⁴ nicht gleichzeitig für Wasserstoff stehen,
- Z: für einen m-wertigen, gegenüber Isocyanatgruppen inerten Rest steht, wie er durch Entfernung der primären Aminogruppen aus einem entsprechenden, gegebenenfalls Sauerstoff- und/oder Stickstoffatome enthaltenden, (cyclo)aliphatisch gebundene Aminogruppen aufweisenden Polyamin des Molekulargewichtsbereiches Mn 88 bis 400 erhalten wird und
- m: für eine ganze Zahl ≥ 2 steht.

Besonders bevorzugt sind Polyaldimine, also Verbindungen der allgemeinen Formel (III), in der alle Reste R³ für Wasserstoff und die Reste R⁴ für Kohlenwasserstoffreste mit 1 bis 8 Kohlenstoffatomen, am meisten bevorzugt jedoch für einen Isopropylrest stehen.

Weiterhin besonders bevorzugt sind Verbindungen der Formel (III), in der Z für einen Kohlenwasserstoffrest steht, wie er durch Entfernen der primären Aminogruppen aus 1-Amino-3,3,5-trimethyl-5-aminomethylcyclohexan (IPDA) erhalten wird.

Die zur Herstellung der Polyaldimine bzw. Polyketimine verwendbaren Aldehyde bzw. Ketone entsprechen der Formel (V) 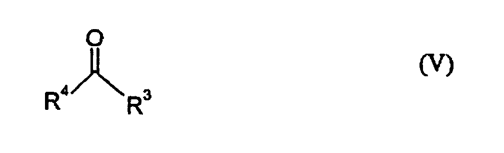 und weisen vorzugsweise ein Molekulargewicht von 58 bis 198 (Ketone) bzw. 44 bis 128 (Aldehyde) auf.

Geeignete Aldehyde sind beispielsweise Acetaldehyd, Propionaldehyd, n-Butyraldehyd, Isobutyraldehyd, Trimethylacetaldehyd, 2,2-Dimethylpropanal, 2-Ethylhexanal, 3-Cyclohexan-1-carboxaldehyd, Hexanal, Heptanal, Octanal, Valeraldehyd, Benzaldehyd, Tetrahydrobenzaldehyd, Hexahydrobenzaldehyd, Propargylaldehyd, p-Toluylaldehyd, Phenylethanal, 2-Methylpentanal, 3-Methylpentanal, 4-Methylpentanal und Sorbinaldehyd.

Besonders bevorzugt sind dabei n-Butyraldehyd, Isobutyraldehyd, Trimethylacetaldehyd, 2-Ethylhexanal und Hexahydrobenzaldehyd. Am meisten bevorzugt ist Isobutyraldehyd.

Geeignete Ketone sind beispielsweise Aceton, Methylethylketon, Methylpropylketon, Methylisopropylketon, Methylbutylketon, Methylisobutylketon, Methyl-tert.butylketon, Methyl-n-amylketon, Methylisoamylketon, Methylheptylketon, Methylundecylketon, Diethylketon, Ethylbutylketon, Ethylamylketon, Diisopropylketon, Diisobutylketon, Cyclohexanon, Cyclopentanon, Methylcyclohexanon, Isophoron, 5-Methyl-3-heptanon, 1-Phenyl-2-propanon, Acetophenon, Methylnonylketon, Dinonylketon, 3,3,5-Trimethylcyclohexanon.

Besonders geeignete Ketone sind Cyclopentanon, Cyclohexanon, Methylcyclopentanon, Methylcyclohexanon, 3,3,5-Trimethylcyclopentanon, Cyclobutanon, Methylcyclobutanon, Aceton, Methylethylketon und Methylisobutylketon. Am meisten geeignet ist Methylisobutylketon.

Selbstverständlich können auch Mischungen verschiedener Ketone bzw. Aldehyde und auch Mischungen von Ketonen mit Aldehyden eingesetzt werden.

Bei den zur Herstellung der Verbindungen C zum Einsatz gelangenden Polyaminen handelt es sich um organische Verbindungen, die mindestens zwei und vorzugsweise zwei (m = 2) (cyclo)aliphatisch gebundene primäre Aminogruppen aufweisen. Die Verwendung von solchen Aminen, die aromatisch gebundene Aminogruppen aufweisen, ist zwar ebenfalls möglich, jedoch weniger bevorzugt. Die Polyamine weisen im allgemeinen ein von 88 bis 400 liegendes Molekulargewicht auf. Geeignete Polyamine zur Herstellung der Komponente C sind beispielsweise die bereits oben im Zusammenhang mit der Komponente B genannten Verbindungen, wobei in Formel (III) Z die für X in Formel (II) angegebene Bedeutung hat. Selbstverständlich können zur Herstellung der Komponenten B und C jeweils unterschiedliche Polyamine der beispielhaft genannten Art eingesetzt werden.

Die Herstellung der Polyaldimine bzw. Polyketimine erfolgt nach an sich bekannten Methoden durch Umsetzung der Ausgangskomponenten unter Einhaltung eines stöchiometrischen Verhältnisses von Aminogruppen zu Aldehyd- bzw. Ketogruppen von 1:1 bis 1:1,5. Gegebenenfalls können zur Reaktionsbeschleunigung katalytische Mengen von sauren Substanzen wie z.B. p-Toluolsulfonsäure, Chlorwasserstoff, Schwefelsäure oder Aluminiumchlorid mitverwendet werden.

Die Umsetzung erfolgt im allgemeinen innerhalb des Temperaturbereichs von 20 bis 180°C wobei die Reaktion, gegebenenfalls unter Verwendung eines Schleppmittels (z.B. Toluol, Xylol, Cyclohexan und Octan) zur Entfernung des Reaktionswassers, so lange durchgeführt wird, bis die berechnete Menge an Wasser (1 Mol Wasser pro Mol primäre Aminogruppe) abgespalten ist bzw. bis kein Wasser mehr abgespalten wird. Anschließend werden die Phasen getrennt bzw. das Schleppmittel und gegebenenfalls vorliegende nicht umgesetzte Edukte destillativ abgetrennt. Die so erhaltenen Produkte können ohne weitere Reinigung als Komponente C eingesetzt werden.

Bei der Komponente D handelt es sich um in der Lacktechnologie an sich bekannte Weichmacher. Bevorzugt werden solche Weichmacher der allgemeinen Formel (IV) 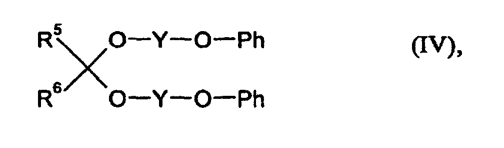 eingesetzt, wobei
- R⁵ und R⁶: für gleiche oder verschiedene Reste stehen und Wasserstoff oder organische Reste mit 1 - 18 C-Atomen bedeuten,
- Y: für einen zweiwertigen organischen Rest mit 1 - 8 C-Atomen steht und
- Ph: für einen gegebenenfalls mit Cl, Br, C₁-C₄-Alkyl substituierten Phenylrest steht.

Diese Verbindungen, im folgenden Acetale bzw. Ketale genannt, lassen sich z.B. durch Reaktion von Aldehyden bzw. Ketonen mit Alkoholen bzw. Orthoameisensäureethylester erhalten.

Bevorzugt wird eine solche Verbindung der allgemeinen Formel (IV) eingesetzt, bei der
- R⁵ und R⁶: für Wasserstoff,
- Y: für eine Ethylengruppe und
- Ph: fiir eine unsubstituierte Phenylgruppe stehen.

Eine solche Verbindung wird z.B. von der Bayer AG unter dem Handelsnamen "Desavin®" als Weichmacher für Lackharze vertrieben.

Bei der Komponente E handelt es sich um Rizinusöl, welches dem erfindungsgemäßen Überzugsmittel entweder als separate Komponente und/oder als Bestandteil einer oder mehrerer anderer Komponenten des Überzugsmittels zugeführt wird, wie z.B. als Suspensionsmedium für eine feste Komponente in einer Paste.

Bei der Komponente F handelt es sich um die in der Lacktechnologie üblichen Lösemittel wie beispielsweise - aber nicht ausschließlich gemeint - Ethylacetat, Butylacetat, Methoxypropylacetat, Methylethylketon, Methylisobutylketon, N-Methylpyrrolidon, Benzin, Chlorbenzol, Solvesso® oder Gemische derartiger Lösemittel. Diese Lösemittel können dem erfindungsgemäßen Überzugsmittel separat und/oder als Bestandteil einer oder mehrerer anderer Komponenten des Überzugsmittels zugeführt werden.

Bevorzugt enthält das erfindungsgemäße Beschichtungsmittel max. 5 Gew.-% und besonders bevorzugt max. 3 Gew.-% an Lösemittel.

Bei der Komponente G handelt es sich um ein oder mehrere, in der Lack- und Korrosionsschutz-Technologie bekannte Pigmente.

Bei der Komponente H handelt es sich um eine oder mehrere, aus der Lacktechnologie bekannten Additive wie beispielsweise - aber nicht ausschließlich gemeint-Trocknungsmittel, Dispergicrhilfsmittel, Antiabsetzmittel, Verlaufsmittel, Füllstoffe, Katalysatoren, Lichtschutzmittel, Vergilbungsstabilisatoren und gegebenenfalls
- zusätzlich zur Komponente D - weitere Weichmacher. Die Einstellung der oben genannten, erfindungsgemäßen Lackeigenschaften: (i) hoher Festkörpergehalt (> 90 Gew.-%), (ii) Formulierung mit hohem Standvermögen möglich (keine Nasenbildung an senkrechten Flächen), (iii) keine Blasenbildung beim Trocknen des Filmes, (iv) ausreichende Topfzeiten, (v) Trocknungszeiten von unter 8 Stunden, (vi) vielfältige Applikationsmöglichkeiten, (vii) Schichtdicken bis zu 180 µm möglich, (viii) sehr gute Haftung, (ix) keine Rißbildung im Film bei Erwärmung und (x) Witterungsbeständigkeit der Überzüge, kann auch ohne diese Komponente(n) H erreicht werden und ist lediglich zur Erzielung weiterer Effekte erforderlich.

Das erfindungsgemäße Überzugsmittel enthält die oben angeführten Komponenten A bis H in folgenden, jeweils auf Gewichtsprozent bezogenen Zusammensetzungen, mit der Maßgabe, daß die Summe der prozentualen Gewichtsanteile der Komponenten A bis H an dem erfindungsgemäßen Überzugsmittel 100 % ergibt:

| | |
|---|---|
| 25 - 50 % | Komponente A, |
| 5 - 20 % | Komponente B, |
| 10 - 30 % | Komponente C, |
| 0,1 - 5,0 % | Komponente D, |
| 0,1 - 5,0 % | Komponente E, |
| 0,1 - 10,0 % | Komponente F, |
| 15 - 35 % | Komponente G und |
| 0 - 10 % | Komponente H. |

Bevorzugt sind solche Zusammensetzungen des erfindungsgemäßen Überzugsmittels, die zu

| | |
|---|---|
| 30 - 45 % | Komponente A, |
| 5 - 15 % | Komponente B, |
| 10 - 20 % | Komponente C, |
| 0,1 - 3,0 % | Komponente D, |
| 0,1 - 4,0 % | Komponente E, |
| 0,1 - 5,0 % | Komponente F, |
| 20 - 30 % | Komponente G und |
| 1 - 8 % | Komponente H enthalten, |

mit der Maßgabe, daß die Summe der prozentualen Gewichtsanteile der Komponenten A bis H an dem erfindungsgemäßen Überzugsmittel 100 % ergibt.

Ganz besonders bevorzugt sind solche Zusammensetzungen des erfindungsgemäßen Überzugsmittels, die zu

| | |
|---|---|
| 35 - 39 % | Komponente A, |
| 8 - 15 % | Komponente B, |
| 13 - 18 % | Komponente C, |
| 1 - 3 % | Komponente D, |
| 1,5 - 3,5 % | Komponente E, |
| 0,1 - 3,0 % | Komponente F, |
| 24 - 28 % | Komponente G und |
| 3 - 7 % | Komponente H enthalten, |

mit der Maßgabe, daß die Summe der prozentualen Gewichtsanteile der Komponenten A bis H an dem erfindungsgemäßen Überzugsmittel 100 % ergibt.

Die Herstellung des erfindungsgemäßen Überzugsmittels erfolgt beispielsweise zunächst durch Abmischung der Einzelkomponenten B bis H. Diese Abmischung kann in einem oder auch in mehreren, hintereinanderfolgenden Schritten vorgenommen werden. Vor der Verarbeitung wird Komponente A zugesetzt und gut eingearbeitet. Das so hergestellte Überzugsmittel kann durch Streichen, Spritzen und Rollen verarbeitet werden.

Die beim erfindungsgemäßen Verfahren zu beschichtenden Substrate können vor der Durchführung des erfindungsgemäßen Verfahrens mit geeigneten Grundierungen und Basisüberzügen versehen sein. Die Trocknung der gemäß dem erfindungsgemäßen Verfahren aufgebrachten Überzüge kann in einem weiten Temperaturintervall erfolgen, das von -10 bis 100°C reicht.

Das erfindungsgemäße Überzugsmittel eignet sich hervorragend als Decklack, und hier besonders als Korrosionsschutzdecklack. Die mit diesem erfindungsgemäßen Überzugsmittel hergestellten Beschichtungen sind kreidungs-, licht-, farbton- und glanzstabil. Es sind - unter Einbeziehung der Abspaltung von Aldehyd bzw. Keton während der Härtung - Formulierungen mit Festkörpergehalten von bis zu 90 Vol.-% bei hoher Standfestigkeit und ausreichender Topfzeit bei der Verarbeitung sowie mit vielfältigen Applikationsmöglichkeiten möglich.

Die empfohlene Schichtdicke beträgt 60 µm, wobei allerdings - gemäß den Forderungen der DIN 55928 bzw. der künftig geltenden EN ISO 12944 - auch die dreifache Schichtdicke von 180 µm möglich ist, ohne daß es zu Nasenbildung aufgrund mangelndem Standvermögen und zur Blasenbildung kommt. Die erfindungsgemäßen Überzugsmittel erfüllen diese Forderung. Im Gegensatz zu den herkömmlichen Systemen, bei denen die vollständige Aushärtung des Films bis zu 72 Stunden dauert, ist bei den erfindungsgemäßen Überzügen die Aushärtung bereits nach 24 Stunden so weit fortgeschritten, daß eine Oberflächenbehandlung wie z.B. zur Entfernung von Graffiti-Besprühungen mit agressiven Reinigungsmitteln keine Zerstörung der Filmoberfläche zur Folge hat.

Der mit dem erfindungsgemäßen Überzugsmittel erreichbare Oberflächenschutz wird anhand des Beispiels 2 demonstriert. Beispiel 1 (Vergleichsbeispiel) demonstriert die starke Abnahme der Filmqualität bei Abweichung von der Additivzusammensetzung, wo auf den Zusatz der Komponenten D (Desavin, Weichmacher vom Acetaltyp) und E (Rizinusöl, in Baylith L-Paste enthalten, nicht aber in Baylith L-Pulver!) verzichtet wurde. Hierbei werden Filme erzeugt, die unter Witterungsbedingungen mit thermischer Belastung Rißbildung zeigen. Besonders hervorzuheben sind beim erfindungsgemäßen Beispiel 2 außerdem das Ausbleiben der Blasenbildung sowie die größere maximale Schichtdicke.

### Beispiele:

In den nachfolgenden Beispielen werden folgende Ausgangsmaterialien eingesetzt (in Klammem die Bezeichnung der betreffenden Komponente in obiger Beschreibung).

### Polyisocyanat Desmodur VP LS 2025/1® (A):

Handelsübliches, Isocyanuratgruppen aufweisendes Lackpolyisocyanat, erhalten durch Trimerisierung von Hexamethylendiisocyanat, lösemittelfrei, 22,5 Gew.-% NCO-Gehalt, Viskosität ca. 1 000 mPas/23°C

### Polyisocyanat Desmodur XP 7040E® (A):

Handelsübliches, Isocyanurat- und Allophanatgruppen aufweisendes Lackpolyisocyanat, auf Basis von Hexamethylendiisocyanat, lösemittelfrei, 19,5 Gew.-% NCO-Gehalt, Viskosität ca. 300 mPas/23°C

### Polyasparaginsäureester Desmophen VP LS 2973® ( B):

Handelsüblicher Polyasparaginsäureester, erhalten durch Addition von 1 Mol 3,3'-Dimethyl-4,4'-diaminodicyclohexylmethan an 2 Mol Maleinsäurediethylester, 90 %ige Lösung in Butylacetat (F). Äquivalentgewicht der Lösung ca. 325 g/NH, Viskosität der Lösung ca. 130 mPas/23°C.

### Polyasparaginsäureester Desmophen XP 7068® ( B):

Handelsüblicher Polyasparaginsäureester, erhalten durch Addition von 1 Mol 3,3'-Dimethyl-4,4'-diaminodicyclohexylmethan an 2 Mol Maleinsäurediethylester (entspricht Desmophen VP LS 2973 ohne Lösemittel)

### Polyaldimin Desmophen VP LS 2142® bzw Desmophen XP 7076® (C):

Handelsübliches Polyaldimin aus 1 Mol l-Amino-3,3,5-trimethyl-5-aminomethylcyclohexan und 2 Mol Isobutyraldehyd, Viskosität ca. 25 mPas/23°C, Äquivalentgewicht 139 g.

### Desavin® (D):

Handelsüblicher Weichmacher der Bayer AG, enthält zu 100 % Bis(2-phenoxyethyl)-formal.

### Baylith L®-Paste:

Handelsübliches Additiv (H) der Bayer AG, 50 %ig in Rizinusöl (E).

### Baylith L®-Pulver

Handelsübliches Additiv (H) der Bayer AG, ohne Rizinusöl !

### Bayertitan R-KB-4®:

Handelsübliches Titandioxid-Pigment (G) der Bayer AG

### Acronal 700 L®:

Handelsübliches Verlaufsadditiv (H) der BASF AG, 50 %ig in Ethylacetat (F)

### Tinuvin 292®:

Handelsüblicher Vergilbungsstabilisator (H) der Ciba Geigy GmbH

### Byk 085®:

Handelsübliches Antiblasen-Additiv (H) der Byk-Chemie GmbH

### Disperbyk 110®:

Handelsübliches Dispergieradditiv (H) der Byk-Chemie GmbH, 52 %ig in Methylpropylacetat/Alkylbenzol (1 : 1) (F)

### Byk 410®:

Handelsübliches Antiablauf-Additiv (H) der Byk-Chemie GmbH, 52 %ig in N-Methyl-pyrrolidon (F)

### Byk 141®:

Handelsübliches Additiv (H) der Byk-Chemie GmbH, 3 %ig in Alkylbenzol/Isobutanol (11 : 2) (F)

### Raven Black 450®:

Handelsübliches Pigment (G) der Byk-Chemie GmbH

### Beispiel 1 (Vergleichsbeispiel)

Desmophen XP 7068® (B), Desmophen XP 7076® (C), Baylith L-Pulver® (H), Bayertitan R-KB-4® (G), Acronal 700 L® (H + F), Tinuvin 292 (H), Byk 141 (H), Raven Black® (G) und Disperbyk 110® (H + F) werden 10 Minuten bei 1 200 U/min vordispergiert. Anschließend wird auf einer Sand/Perimühle unter Kühlung angerieben.

Vor der Verarbeitung wird Desmodur XP 7040 E® (A) zugesetzt und gut eingearbeitet.

### Beispiel 2 (erfindungsgemäß)

Desmophen VP LS 2973® (B + F), Desmophen VP LS 2142® (C), Desavin (D), Baylith L-Paste (H + E), Bayertitan R-KB-4® (G), Acronal 700 L® (H + F), Tinuvin 292® (H), Byk 085® (H; erste Teilmenge) und Disperbyk 110® (H + F) werden 10 Minuten bei 1200 U/min vordispergiert. Anschließend wird auf einer Sand/Perlmühle unter Kühlung angerieben. Nach der Anreibung werden hintereinander Byk 410® (H) und Byk 085® (H; zweite Teilmenge) untergerührt.

Vor der Verarbeitung wird Desmodur VP LS 2025/1® (A) zugesetzt und gut eingearbeitet.

**Tabelle 1**

| Zusammensetzung der 2K-PUR-Decklacke aus Vergleichsbeispiel 1 und dem erfindungsgemäßen Beispiel 2 | | |
|---|---|---|
| Komponenten (Angabe der Anteile in Gew.-%) | Beispiel 1 (Vergleich) | Beispiel 2 (erfindungsgemäß) |
| Desmophen XP 7068® | 11,23 | -- |
| Desmophen VP LS 2973® | -- | 10,56 |
| Desmophen XP 7076® | 16,81 | -- |
| Desmophen VP LS 2142® | -- | 15,73 |
| Desavin® | -- | 1,93 |
| Baylith L-Pulver® | 2,73 | -- |
| Baylith L-Paste®, 50 %ig in Rizinusöl | -- | 5,14 |
| Bayertitan R-KB-4® | 27,58 | 25,94 |
| Acronal 700 L® | 0,25 | 0,23 |
| Tinuvin 292® | 0,61 | 0,56 |
| Byk 141® | 0,72 | -- |
| Byk 085®, erste Teilmenge | -- | 0,45 |
| Disperbyk 110® | 0,86 | 0,81 |
| Raven Black® | 0,15 | -- |
| Byk 410® | -- | 1,29 |
| Byk 085®, zweite Teilmenge | -- | 0,23 |
| Desmodur XP 7040® | 39,06 | -- |
| Desmodur VP LS 2025/1® | -- | 37,13 |
| | 100,00 | 100,00 |
| Verhältnis NCO / NH | | ca. 1,3 |

**Tabelle 2**

| Kenndaten der Formulierungen aus den Beispielen 1 und 2 | | |
|---|---|---|
| | Beispiel 1 (Vergleich) | Beispiel 2 (erfindungsgemäß) |
| PVK | ca. 11% | ca. 11% |
| Gewichtsfestkörper (%) | 98,7 % | 98,0 % |
| Volumenfestkörper (%) | 98,1 % | 97,0 % |
| Verarbeitungszeit (h) | ca. 8 h | ca. 8 h |

**Tabelle 3:**

| Lacktechnische Eigenschaften der Lacke aus den Beispielen 1 und 2 | | |
|---|---|---|
| 90 µm - Naßfilm | Beispiel 1 (Vergleich) | Beispiel 2 (erfindungsgemäß) |
| Trocknung nach DIN 53150 T1 (h; Sandtrocknung) | 4 h | 3 h |
| T6 (h; Drucktrocknung) | > 8 h | 7 h |
| Pendelhärte nach DIN 53157 7d-RT* | 177 s | 175 s |
| Lösemittelbeständigkeit ** 7d-RT * 1 min Belastung | Testbenzin/Solventnaphtha 100/Methoxypropyacetat/Aceton/Ethanol 0 0 0 0 1 | 0 0 0 0 0 |
| Wasserfestigkeit 7d-RT* 4 h Belastung | Blasenbildung | keine Blasen |
| Dehnbarkeit (DIN ISO 1520) 7d-RT* | 6,0 | 7,0 |
| Dornbiege, Kon Dorn DIN ISO 6860; 7d-RT* | 20 % | 16 % |
| Max. Schichtdicke - Ablaufneigung | ab 80 µm | ab 160 µm |
| - Blasen | > 120 µm | > 160 µm |
| - Verlauf (visuell, je kleiner die Zahl, desto besser) | 0 - 1 | 2 |
| **Rißbildung bei Temperatur- lagerung** nur Deckbeschichtung - bei 60°C | über 50 Tage | über 50 Tage |
| - bei 80°C | über 50 Tage | über 50 Tage |
| 3-Schichtaufbau - bei 60°C | 1K-PUR + 1K-PUR + 2K-PUR über 50 Tage | -Deckbeschichtung über 50 Tage |
| - bei 80°C | über 50 Tage | über 50 Tage |
| **Korrosionsschutzprüfungen** Beschichtungsaufbau: GB | 1K-PUR-Zinkstaub | 1K-PUR-Zinkstaub |
| ZB | 1K-PUR- | 1K-PUR- |
| DB | Eisenglimmer Formulierung Bsp. 1 | Eisenglimmer Formulierung Bsp. 2 |
| Salzsprühtest DIN 53167 1000 h | Unterwanderung WD 3 Rißbildung | keine Unterwanderung keine Rißbildung |
| Kondenswassertest DIN 50017; 1000 h | keine Schäden feststellbar | keine Schäden feststellbar |
| Lichtbeständigkeit (nur Deckbeschichtung) | Glanzwerte nach Gardner 20° 60° Kreidung | 20° 60° Kreidung |
| Xeno 1200 - 0 h | 86 94 0 | 65 90 0 |
| - 500 h | 77 92 0 | 58 89 0 |
| - 1000 h | 70 89 0 | 56 89 0 |
| - 1500 h | 56 84 0 | 53 89 0 |
| - 2000 h | 45 81 0 | 52 89 0 |
| 313) QUV (UVB 313) - 0 h | 72 91 0 | 63 90 0 |
| - 500 h | 46 84 0 | 26 73 0 |
| - 1000 h | 26 70 0 | 12 56 0 |
| - 1500 h | 24 69 0 | 05 41 0 |
| - 2000 h | 15 59 0 | 00 33 0 |

| | | |
|---|---|---|
| *7d-RT: 7 Tage Trocknung bei Raumtemperatur | | |
| ** Lösemittelbeständigkeit: 0 = sehr gut, 5 = sehr schlecht | | |

Der mit dem erfindungsgemäßen Überzugsmittel erzeugte Film bleibt - im Gegensatz zu Beispiel 1 - auch bei thermischer Belastung rißfrei.

## Patentansprüche

1. Gegenstand der Erfindung ist ein Überzugsmittel, das zu
A) 25 - 50 Gew.-% aus einer Polyisocyanatkomponente, zu
B) 5 - 20 % aus einem oder mehreren Polyaminen der Formel (II) 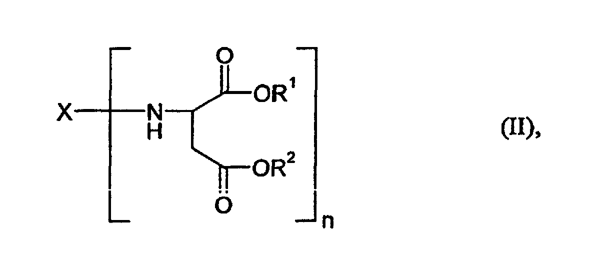 wobei
X für einen n-wertigen, gegenüber Isocyanatgruppen inerten Rest steht, wie er durch Entfernung der primären Aminogruppen aus einem organischen Polyamin des Molekulargewichtsbereiches Mn 88 bis 400 mit n primären (cyclo)aliphatisch gebundenen Aminogruppen erhalten wird,
R¹ und R² für gleiche oder verschiedene organische Reste mit 1 bis 18 C-Atomen stehen und
n für eine ganze Zahl von mindestens 2 steht, zu
C) 10 - 30 Gew.-% aus einer oder mehreren Verbindungen des Molekulargewichtsbereiches Mn 112 bis 600 der allgemeinen Formel (III) 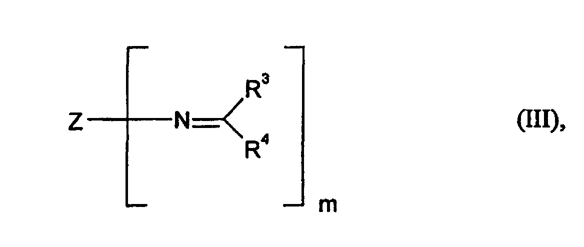 wobei
R³ und R⁴ für für gleiche oder verschiedene Reste und für Wasserstoff oder organische Reste mit 1 - 18 C-Atomen stehen und
Z für einen m-wertigen, gegenüber Isocyanatgruppen inerten Rest steht, wie er durch Entfernung der primären Aminogruppen aus einem organischen Polyamin des Molekulargewichtsbereiches Mn 88 bis 400 mit m primären (cyclo)aliphatisch gebundenen Aminogruppen erhalten wird, und
m für eine ganze Zahl ≥ 2 steht, zu
D) 0,1 - 5,0 Gew.-% aus Acetalen der allgemeinen Formel (IV) 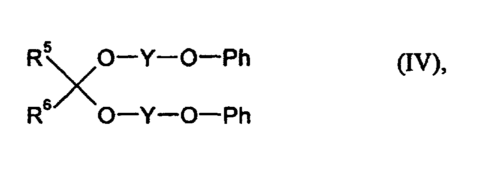 wobei
R⁵ und R⁶ für gleiche oder verschiedene Reste und für Wasserstoff oder organische Reste mit 1 - 18 C-Atomen stehen,
Y für einen zweiwertigen organischen Rest mit 1 - 8 C-Atomen steht und
Ph für einen gegebenenfalls kemsubstituierten Phenylrest steht, zu
E) 0,1 -5,0 Gew.-% aus Rizinusöl, zu
F) 0,1 - 10,0 Gew.-% aus einem oder mehreren in der Lacktechnologie üblichen Lösemittel, zu
G) 15 - 35 Gew.-% aus einem oder mehreren, aus der Lack- und Korrosionsschutz-Technologie bekannten Pigmenten sowie zu
H) 0 - 10 Gew.-% aus einem oder mehreren weiteren, aus der Lack- und Korrosionsschutz-Technologie bekannten Additiven
besteht,
mit der Maßgabe, daß die Summe der prozentualen Gewichtsanteile der Komponenten A bis H 100 % ergibt.

2. Überzugsmittel nach Anspruch 1, **dadurch gekennzeichnet, daß** es sich bei der Polyisocyanatkomponente A um ein Isocyanuratgruppen-haltiges Derivat auf Basis von Hexamethylendiisocyanat mit einer Viskosität von max. 5 000 mPas/23°C und einem NCO-Gehalt von 16 bis 24 Gew.-% handelt.

3. Überzugsmittel nach Anspruch 1, **dadurch gekennzeichnet, daß** es sich bei der Komponente B um solche Verbindungen der allgemeinen Formel (II) handelt, für welche
X für einen zweiwertigen Kohlenwasserstoffrest steht, wie er durch Entfernung der Aminogruppen aus 1-Amino-3,3,5-trimethyl-5-aminomethylcyclohexan, 4,4'-Diaminodicyclohexylmethan, 3,3'-Dimethyl-4,4'-diaminodicyclohexylmethan, Hexahydro-2,4- und/oder 2,6-di-aminotoluol, den isomeren C-Monomethyl-diaminodicyclohexylmethanen oder aus 3(4)-Aminomethyl-1-methylcyclohexylamin erhalten wird, und
R¹ und R² für eine Methyl-, Ethyl-, n-Butyl- oder 2-Ethylhexylgruppe stehen.

4. Überzugsmittel nach Anspruch 1, **dadurch gekennzeichnet, daß** es sich bei der Komponente B um eine Verbindung der allgemeinen Formel (II) handelt, für welche
X für einen Kohlenwasserstoffrest steht, wie er durch Entfernung der Aminogruppen aus 3,3'-Dimethyl-4,4'-diaminodicyclohexylmethan erhalten wird und für welche R¹ und R² für eine Ethylgruppe stehen.

5. Überzugsmittel nach Anspruch 1, **dadurch gekennzeichnet, daß** es sich bei der Komponente C um Verbindungen der allgemeinen Formel (III) handelt, für welche R³ für ein Wasserstoffatom und R⁴ für Kohlenwasserstoffreste mit 1 bis 8 C-Atomen stehen.

6. Überzugsmittel nach Anspruch 1, **dadurch gekennzeichnet, daß** es sich bei der Komponente C um Verbindungen der allgemeinen Formel (III) handelt, für welche Z für einen Kohlenwasserstoffrest steht, wie er durch Entfernung der Aminogruppen aus 1-Amino-3,3,5-trimethyl-5-aminomethylcyclohexan (IPDA) erhalten wird.

7. Überzugsmittel nach Anspruch 1, **dadurch gekennzeichnet, daß** es sich bei der Komponente C um Verbindungen der allgemeinen Formel (III) handelt, für welche Z für einen Kohlenwasserstoffrest steht, wie er durch Entfernung der Aminogruppen aus 1-Amino-3,3,5-trimethyl-5-aminomethylcyclohexan (IPDA) erhalten wird, und für welche R³ für ein Wasserstoffatom und R⁴ für einen Isopropylrest stehen.

8. Überzugsmittel nach Anspruch 1, **dadurch gekennzeichnet, daß** es sich bei der Komponente D um Bis(2-phenoxyethyl)formal handelt, wobei R⁵ und R⁶ für Wasserstoffatome, Y für eine Ethylengruppe und Ph für eine unsubstituierte Phenylgruppe stehen.

9. Überzugsmittel nach Anspruch 1, **dadurch gekennzeichnet, daß** das Überzugsmittel aus
| | |
|---|---|
| 30 - 45 % | der Komponente A, |
| 5 - 15 % | der Komponente B, |
| 10 - 20 % | der Komponente C, |
| 0,1- 3,0 % | der Komponente D, |
| 0,1 - 4,0 % | der Komponente E, |
| 0,1 - 5,0 % | der Komponente F, |
| 20 - 30 % | der Komponente G und |
| 1 - 8 % | der Komponente H besteht, |
mit der Maßgabe, daß die Summe der prozentualen Gewichtsanteile der Komponenten A bis H an dem erfindungsgemäßen Überzugsmittel 100 % ergibt.

10. Verwendung der Überzugsmittel nach Anspruch 1 als Korrosionsschutzdecklack durch Streichen, Spritzen oder Rollen.

## Claims

1. A coating composition comprising
A) 25 - 50 wt.% a polyisocyanate component,
B) 5 - 20% one or more polyamines of the formula (II) 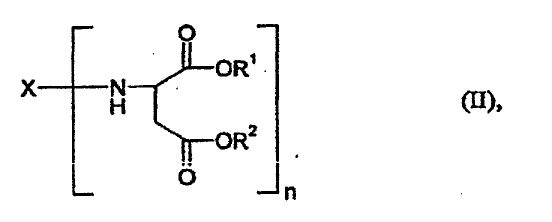 wherein
X represents an n-valent radical which is inert towards isocyanate groups, such as is obtained by removal of the primary amino groups from an organic polyamine of the molecular weight range Mn 88 to 400 with n primary (cyclo)aliphatically bonded amino groups,
R¹ and R² represent identical or different organic radicals having 1 to 18 C atoms and
n represents an integer of at least 2,
C) 10 - 30 wt.% one or more compounds of the molecular weight range Mn 112 to 600 of the general formula (III) 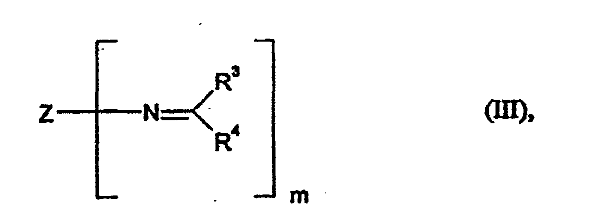 wherein
R³ and R⁴ represent identical or different radicals and represent hydrogen or organic radicals having 1 - 18 C atoms and
Z represents an m-valent radical which is inert towards isocyanate groups, such as is obtained by removal of the primary amino groups from an organic polyamine of the molecular weight range Mn 88 to 400 with m primary (cyclo)aliphatically bonded amino groups, and
m represents an integer ≥ 2,
D) 0.1 - 5.0 wt.% acetals of the general formula (IV) 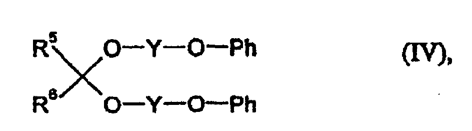 wherein
R⁵ and R⁶ represent identical or different radicals and represent hydrogen or organic radicals having 1 - 18 C atoms,
Y represents a divalent organic radical having 1 - 8 C atoms and
Ph represents an optionally ring-substituted phenyl radical,
E) 0.1 - 5.0 wt.% castor oil,
F) 0.1 - 10.0 wt.% one or more conventional solvents in paint technology,
G) 15 - 35 wt.% one or more pigments known from paint and anti-corrosion technology, and
H) 0 - 10 wt.% one or more further additives known from paint and anti-corrosion technology,
with the proviso that the sum of the percentage contents by weight of components A to H amounts to 100%.

2. Coating composition according to claim 1, **characterized in that** polyisocyanate component A is a derivative containing isocyanurate groups which is based on hexamethylene-diisocyanate and has a viscosity of max. 5,000 mPas/23°C and an NCO content of 16 to 24 wt.%.

3. Coating composition according to claim 1, **characterized in that** component B comprises those compounds of the general formula (II) for which
X represents a divalent hydrocarbon radical such as is obtained by removal of the amino groups from 1-amino-3,3,5-trimethyl-5-aminomethylcyclohexane, 4,4'-diaminodicyclohexylmethane, 3,3'-dimethyl-4,4'-diaminodicyclohexylmethane, hexahydro-2,4-and/or -2,6-diaminotoluene, the isomeric C-monomethyldiaminodicyclo-hexylmethanes or from 3(4)-aminomethyl-1-methylcyclohexylamine and
R¹ and R² represent a methyl, ethyl, n-butyl or 2-ethylhexyl group.

4. Coating composition according to claim 1, **characterized in that** component B comprises a compound of the general formula (II) for which
X represents a hydrocarbon radical such as is obtained by removal of the amino groups from 3,3'-dimethyl-4,4'-diaminodicyclohexyl-methane, and for which R¹ and R² represent an ethyl group.

5. Coating composition according to claim 1, **characterized in that** component C comprises compounds of the general formula (III) for which R³ represents a hydrogen atom and R⁴ represents hydrocarbon radicals having 1 to 8 C atoms.

6. Coating composition according to claim 1, **characterized in that** component C comprises compounds of the general formula (III) for which Z represents a hydrocarbon radical such as is obtained by removal of the amino groups from 1-amino-3,3,5-trimethyl-5-aminomethylcyclohexane (IPDA).

7. Coating composition according to claim 1,
**characterized in that** component C comprises compounds of the general formula (III) for which Z represents a hydrocarbon radical such as is obtained by removal of the amino groups from 1-amino-3,3,5-trimethyl-5-aminomethylcyclohexane (IPDA), and for which R³ represents a hydrogen atom and R⁴ represents an isopropyl radical.

8. Coating composition according to claim 1, **characterized in that** component D comprises bis(2-phenoxyethyl)formal, wherein R⁵ and R⁶ represent hydrogen atoms, Y represents an ethylene group and Ph represents an unsubstituted phenyl group.

9. Coating composition according to claim 1, **characterized in that** the coating composition comprises
| | |
|---|---|
| 30 - 45% | component A, |
| 5 - 15% | component B, |
| 10 - 20% | component C, |
| 0.1-3.0% | component D, |
| 0.1-4.0% | component E, |
| 0.1-5.0% | component F, |
| 20 - 30% | component G and |
| 1 - 8% | component H, |
with the proviso that the sum of the percentage contents by weight of components A to H in the coating composition according to the invention amounts to 100%.

10. Use of the coating composition according to claim 1 as an anti-corrosive top coat by brushing, spraying or rolling.

## Revendications

1. L'invention a pour objet un produit de revêtement qui consiste en :
A) 25 à 50 % en poids d'un composant polyisocyanate,
B) 5 à 20 % d'une ou plusieurs polyamines de formule (II) 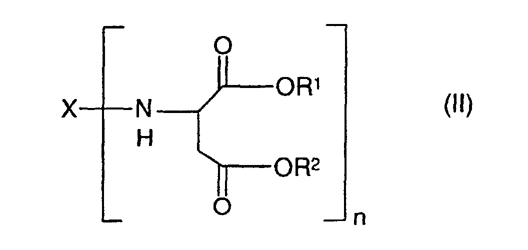 dans laquelle
X représente un radical de valence n inerte à l'égard des groupes isocyanate, tel qu'obtenu par élimination des groupes amino primaires d'une polyamine organique de poids moléculaire Mn 88 à 400 contenant n groupes amino primaires à liaisons (cyclo)aliphatiques,
R¹ et R² ayant des significations identiques ou différentes, représentent des radicaux organiques en C₁ à C₁₈ et
n est un nombre entier égal au moins à 2,
C) 10 à 30 % en poids d'un ou plusieurs composés de poids moléculaire Mn 112 à 600 répondant à la formule générale (III) 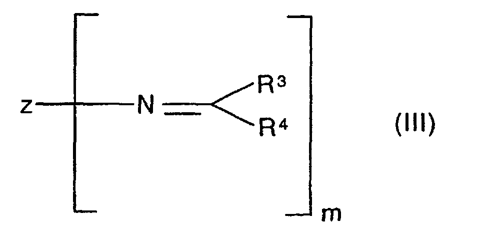 dans laquelle
R³ et R⁴, ayant des significations identiques ou différentes, représentent chacun l'hydrogène ou un radical organique en C₁ à C₁₈ et Le A 33 014 (0 959 086)
Z représente un radical de valence m, inerte à l'égard des groupes isocyanate, tel qu'obtenu par élimination des groupes amino primaires d'une polyamine organique de poids moléculaire Mn 88 à 400 contenant m groupes amino primaires à liaisons (cyclo)aliphatiques et
m est un nombre entier supérieur ou égal à 2,
D) 0,1 à 5,0 % en poids d'acétals de formule générale (IV) 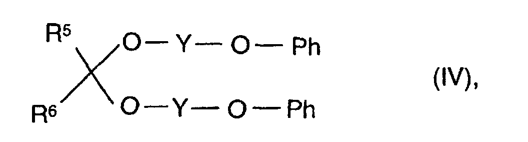 dans laquelle
R⁵ et R⁶, ayant des significations identiques ou différentes, représentent chacun l'hydrogène ou un radical organique en C₁ à C₁₈,
Y représente un radical organique divalent en C₁ à C₈ et
Ph représente un groupe phényle éventuellement substitué dans le noyau,
E) 0,1 à 5,0 % en poids d'huile de ricin,
F) 0,1 à 10,0 % en poids d'un ou plusieurs solvants usuels dans l'industrie des peintures et vernis,
G) 15 à 35 % en poids d'un ou plusieurs pigments connus dans l'industrie des peintures et vernis et le domaine de la protection contre la corrosion et
H) 0 à 10 % en poids d'un ou plusieurs autres additifs connus dans l'industrie des peintures et vernis et dans le domaine de la protection contre la corrosion,
la somme des pourcentages indiqués pour les composants A à H représentant 100 %.

2. Produit de revêtement selon la revendication 1, **caractérisé en ce que** le composant polyisocyanate A consiste en un dérivé à groupes isocyanurate à base de l'hexaméthylènediisocyanate, ayant une viscosité de 5000 mPa.s/23°C au maximum et une teneur en NCO de 16 à 24 % en poids.

3. Produit de revêtement selon la revendication 1, **caractérisé en ce que** le composant B consiste en composés de formule générale (II) dans laquelle
X représente un radical hydrocarboné divalent tel qu'obtenu par élimination des groupes amino du 1-amino-3,3,5-triméthyl-5-aminométhylcyclohexane, du 4,4'-diaminodicyclohexylméthane, du 3,3'-diméthyl-4,4'-diaminodicyclohexylméthane, de l'hexahydro-2,4- et/ou -2,6-diaminotoluène, des diaminodicyclohexylméthanes isomères monométhylés sur le carbone ou de la 3-(4)-aminométhyl-1-méthylcyclohexylamine et
R¹ et R² représentent des groupes méthyle, éthyle, n-butyle ou 2-éthylhexyle.

4. Produit de revêtement selon la revendication 1, **caractérisé en ce que** le composant B consiste en un composé de formule générale (II) dans laquelle
X représente un radical hydrocarboné tel qu'obtenu par élimination des groupes amino du 3,3'-diméthyl-4,4'-diaminodicyclohexylméthane et R¹ et R² représentent tous deux des groupes éthyle.

5. Produit de revêtement selon la revendication 1, **caractérisé en ce que** le composant C consiste en composés de formule générale (III) dans laquelle R³ représente un atome d'hydrogène et R⁴ un radical hydrocarboné en C₁ à C₈.

6. Produit de revêtement selon la revendication 1, **caractérisé en ce que** le composant C consiste en composés de formule générale (III) dans laquelle Z représente un radical hydrocarboné tel qu'obtenu par élimination des groupes amino du 1-amino-3,3,5-triméthyl-5-aminométhylcyclohexane (IPDA).

7. Produit de revêtement selon la revendication 1, **caractérisé en ce que** le composant C consiste en composés de formule générale (III) dans laquelle Z représente un radical hydrocarboné tel qu'obtenu par élimination des groupes amino du 1-amino-3,3,5-triméthyl-5-aminométhylcyclohexane (IPDA) et pour lequel R³ représente un atome d'hydrogène et R⁴ un groupe isopropyle.

8. Produit de revêtement selon la revendication 1, **caractérisé en ce que** le composant D consiste en le bis(2-phénoxyéthyl)formal, R⁵ et R⁶ représentent des atomes d'hydrogène, Y un groupe éthylène et Ph un groupe phényle non substitué.

9. Produit de revêtement selon la revendication 1, **caractérisé en ce qu'**il consiste en
30 à 45 % du composant A,
5 à 15 % du composant B,
10 à 20 % du composant C,
0,1 à 3,0 % du composant D,
0,1 à 4,0 % du composant E,
0,1 à 5,0 % du composant F,
20 à 30 % du composant G et
1 à 8 % du composant H,
la somme des proportions en poids indiquées pour les composants A à H représentant 100 % du produit de revêtement selon l'invention.

10. Utilisation du produit de revêtement selon la revendication 1 en tant que peinture de couverture protégeant contre la corrosion appliquée à la brosse, au pistolet ou au rouleau.
